# EUROPEAN PATENT APPLICATION

(11) **EP 3 088 132 A1**
(43) Date of publication of application: **02.11.2016**
(21) Application number: 16166872.8
(22) Date of filing: 25.04.2016
(51) Int. Cl.: B25B 23/10, B23P 19/00

(54) **BOLT GRIPPING APPARATUS AND BOLT GRIPPING METHOD**

(30) Priority: 27.04.2015 JP 2015090119
(71) Applicant: Toyota Jidosha Kabushiki Kaisha, Toyota-shi, Aichi 471-8571 (JP)
(72) Inventor: MIURA, Kazuya, Toyota-shi,, Aichi 471-8571 (JP); TASAKA, Masahiro, Toyota-shi,, Aichi 471-8571 (JP); SAGAWA, Takashi, Toyota-shi,, Aichi 471-8571 (JP)
(74) Representative: TBK

(57) **Abstract**

A retrieval apparatus (1) for retrieving a bolt (20) includes: a guide member (15) having an opening (16) that passes through vertically; a first plate (11a) that has a first end portion (17a), the first end portion (17a) having a first notched portion (19a) that has a V-shape in a planar view; a second plate (11b) that has a second end portion (17b), the first end portion (17a) and the second end portion (17b) facing each other to define an adjacent region (18), on an upper side of the opening (16). When the bolt (20) is inserted from inside the opening (16) toward the adjacent region (18), the first plate (11a) and the second plate (11b) abut against the bolt (20) and pivot upwards and the first notched portion (19a) and the second end portion (17b) abut against a side surface of the bolt (20) and grip the bolt (20).

## Description

### BACKGROUND OF THE INVENTION

### 1. Field of the Invention

The invention relates to a bolt retrieval apparatus for retrieving a bolt, and to a bolt retrieval method.

### 2. Description of Related Art

In a vehicle assembly line and the like, there are times when a worker must squat down or bend over far to retrieve a bolt in a low position when assembling a vehicle. Such a posture places a strain on the worker. Therefore, in order to reduce the strain on the worker, a bolt retrieval apparatus that retrieves a bolt in a low position when assembling a vehicle is needed.

Japanese Patent Application Publication JP 2002-326180 A describes a chuck apparatus that holds a workpiece by gripping the workpiece between a pair of elastically deformable chuck members that are arranged facing one another. With the chuck apparatus described in JP 2002-326180 A, each of the two chuck members is made to elastically curve and deform, and the workpiece is held between the pair of chuck members using the elastic restoring force from the chuck members, which is generated by the deformation.

As described in the related art, in a vehicle assembly line and the like, there is a need for a bolt retrieval apparatus that retrieves a bolt in a low position when assembling a vehicle. When using the chuck apparatus described in JP 2002-326180 A as a bolt retrieval apparatus, for example, a bolt is gripped between the pair of elastically deformable chuck members that are arranged facing one another, and the bolt is held using friction force generated between the pair of chuck members and the bolt.

However, when a heavy member such as a bolt is gripped using the pair of chuck members, sufficient friction force may not be able to be produced between the pair of chuck members and the bolt, and as a result, the bolt that is held between the pair of chuck members may gradually slip out of position and fall.

### SUMMARY OF THE INVENTION

It is the object of the invention thus provides a bolt retrieval apparatus capable of reliably retrieving a bolt. Further, a respectively improved bolt retrieval method shall be provided. The object is solved by a bolt retrieval apparatus of claim 1. A bolt retrieval method is stated in claim 4

The invention relates to a bolt retrieval apparatus for retrieving a bolt. The retrieval apparatus includes: a guide member having an opening that passes through the guide member vertically; a first plate that has a first end portion, the first end portion having a first notched portion, the first notched portion including a first contacting position and a second contacting position; a second plate that has a second end portion, the first end portion and the second end portion facing each other so as to define an adjacent region, on an upper side of the opening of the guide member. The bolt is insertable from inside the opening toward the adjacent region, the first plate and the second plate are adapted to abut against the bolt and are pivotable upwards and the first notched portion are adapted to abut against a side surface of the bolt at least at the first contacting position and the second contacting position, the second end portion is adapted to abut against a side surface of the bolt, and the first notched portion and the second notched portion are adapted to grip the bolt.

In the bolt retrieval described above, the first notched portion may have a V-shape when the first plate is viewed from above.

In this way, the bolt retrieval apparatus is configured to grip the bolt by the end portion of the first plate and the end portion of the second plate. Therefore, when the bolt tries to fall due to its own weight, the end portion (a notched portion) of the first plate and the end portion of the second plate catch on a groove of the bolt. Moreover, the force with which the first and second plates try to pivot downward is applied to the bolt, so the force with which the first and second plates grip the bolt becomes stronger. As a result, the bolt is able to be inhibited from falling at the time of bolt retrieval, so the bolt can be reliably retrieved. Furthermore, the bolt retrieval apparatus of the invention is provided with a notched portion on at least the end portion of the first plate, and is configured to grip the bolt by the notched portion of the first plate and the end portion of the second plate abutting against a side surface of the bolt. Therefore, the side surface of the bolt is able to be contacted at three locations (four locations when the notched portion is provided on the end portions of both the first and second plates), so the bolt is able to be held stably. Thus, the bolt is able to be reliably retrieved.

In the bolt retrieval apparatus described above, the second end portion may have a second notched portion, the second notched portion including a third contacting portion and a fourth contacting portion, and when the bolt is inserted from inside the opening toward the adjacent region, the second notched portion are adapted to abut against the side surface of the bolt at least at the third contacting portion and the fourth contacting portion.

In the bolt retrieval apparatus described above, the second notched portion may have a V shape when the second plate is viewed from above.

In the bolt retrieval apparatus described above, the first plate may be pivotally connected to a first supporting plate fixed to a pivotable first supporting member, and the second plate may be pivotally connected to a second supporting plate fixed to a pivotable second supporting member. The first and second supporting member can be pivoted such that the bolt gripping portions are wider distanced so that the gripped bolt drops.

According to the aspects described above, it is possible to provide a bolt retrieval apparatus capable of reliably retrieving a bolt.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view of a bolt retrieval apparatus according to one embodiment of the invention;
FIG. 2 is a plan view of the bolt retrieval apparatus according to the embodiment;
FIG. 3 is a sectional view of the bolt retrieval apparatus according to the embodiment gripping a bolt;
FIG. 4 is a plan view of the bolt retrieval apparatus according to the embodiment gripping the bolt;
FIG. 5 is a plan view illustrating another configuration example of the bolt retrieval apparatus according to the embodiment;
FIG. 6 is a plan view of a bolt retrieval apparatus according to a comparative example gripping a bolt;
FIG. 7A is a sectional view illustrating an operation to retrieve the bolt using the bolt retrieval apparatus according to the embodiment;
FIG. 7B is another sectional view illustrating the operation to retrieve the bolt using the bolt retrieval apparatus according to the embodiment;
FIG. 7C is another sectional view illustrating the operation to retrieve the bolt using the bolt retrieval apparatus according to the embodiment;
FIG. 8A is a sectional view illustrating an operation in which the bolt retrieval apparatus according to the embodiment drops the bolt;
FIG. 8B is another sectional view illustrating the operation in which the bolt retrieval apparatus according to the embodiment drops the bolt; and
FIG. 8C is another sectional view illustrating the operation in which the bolt retrieval apparatus according to the embodiment drops the bolt.

### DETAILED DESCRIPTION OF EMBODIMENTS

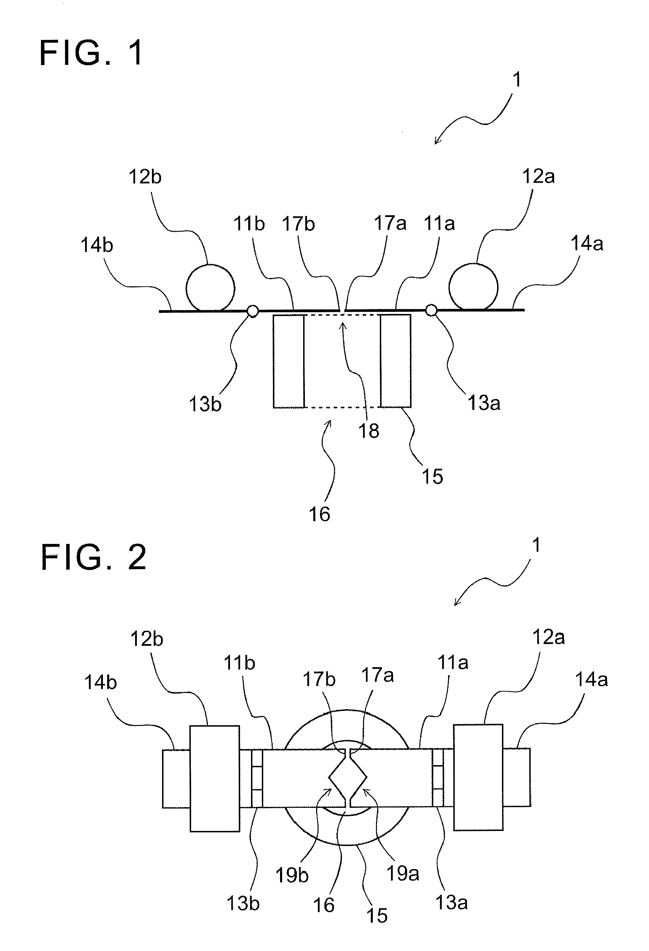

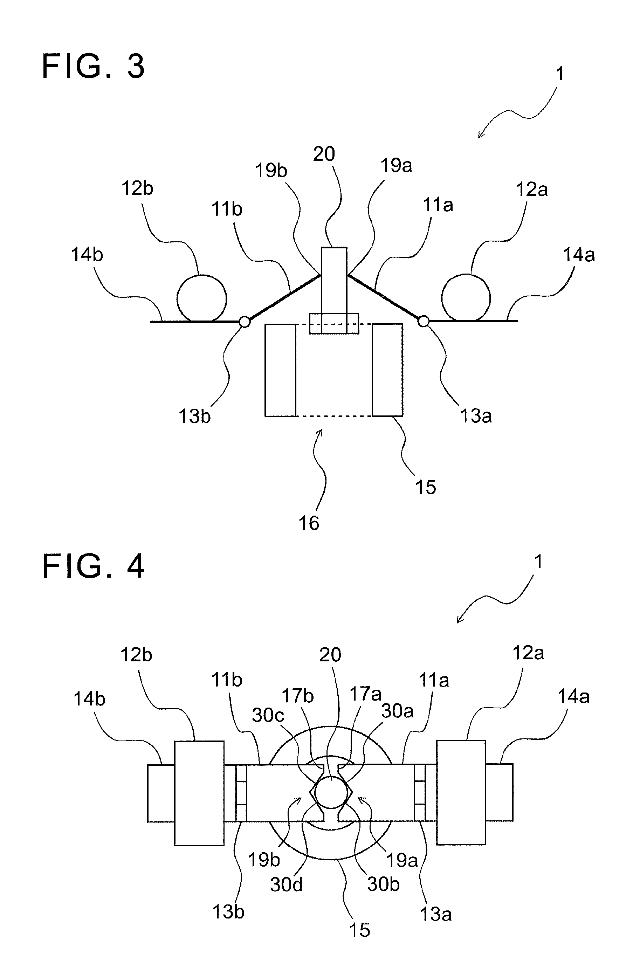

Hereinafter, embodiments of the invention will be described with reference to the accompanying drawings. FIGS. 1 and 2 are a sectional view and a plan view, respectively, of a bolt retrieval apparatus according to one embodiment. Also, FIGS. 3 and 4 are a sectional view and a plan view of the bolt retrieval apparatus of the embodiment gripping a bolt. As shown in FIGS. 1 to 4, the bolt retrieval apparatus 1 according to the embodiment includes plates 11a and 11b, supporting members 12a and 12b, connecting members 13a and 13b, plates 14a and 14b, and a guide member 15.

As shown in FIGS. 1 and 2, the plate 11a and the plate 14a are pivotally connected via the connecting member 13a. The plate 14a is fixed to the supporting member 12a. Similarly, the plate 11b and the plate 14b are pivotally connected via the connecting member 13b. The plate 14b is fixed to the supporting member 12b. The plate 11a is arranged with an end portion 17a. The plate 11b is arranged with an end portion 17b. The end portion 17a of the plate 11a and the end portion 17b of the plate 11b face each other in an adjacent region 18, on an upper side of an opening 16 of the guide member 15. Also, as shown in FIG. 2, the end portion 17a of the plate 11a has a notched portion 19a in which the end portion 17a of the plate 11 a is notched in a V-shape when the plate 11a is viewed from above. Similarly, the end portion 17b of the plate 11b has a notched portion 19b in which the end portion 17b of the plate 11b is notched in a V-shape when the plate 11b is viewed from above.

As shown in FIG. 1, the guide member 15 has the opening 16 that passes through vertically. When retrieving a bolt, the bolt is inserted from inside the opening 16 of the guide member 15 toward the adjacent region 18. An upper surface of the guide member 15 abuts against lower surfaces of the plates 11 a and 11b, thereby inhibiting the plates 11a and 11b from pivoting downward. For example, the plates 11a and 11b, the supporting members 12a and 12b, the connecting members 13a and 13b, the plates 14a and 14b, and the guide member 15 may all be formed using metal material.

Next, a state in which the bolt retrieval apparatus 1 grips a bolt 20 will be described with reference to FIGS. 3 and 4. The sectional view shown in FIG. 3 shows a cross-section at a location where the notched portions 19a and 19b of the plates 11 a and 11b, respectively, abut against the side surface of the bolt 20. When the bolt 20 is inserted from inside the opening 16 of the guide member 15 toward the adjacent region 18 (see FIG. 1), both the plate 11 a and the plate 11b abut against the bolt 20 and pivot upward. At this time, the supporting members 12a and 12b are both fixed such that the plates 14a and 14b do not move, so the plates 11a and 11b pivot upward about the connecting members (pivot axes) 13a and 13b.

Then, the notched portion 19a of the plate 11 a and the notched portion 19b of the plate 11b abut against the side surface of the bolt 20 and grip the bolt 20, as shown in FIG. 4. In this way, the bolt retrieval apparatus 1 according to this embodiment is configured to grip the bolt 20 with the plate 11 a and the plate 11b. Therefore, when the bolt 20 tries to fall due to its own weight, the notched portion 19a of the plate 11 a and the notched portion 19b of the plate 11b catch on a groove of the bolt, and moreover, the force with which the plates 11a and 11b try to pivot downward is applied to the bolt 20, so the force with which the plates 11a and 11b grip the bolt 20 becomes stronger. As a result, the bolt 20 is able to be inhibited from falling at the time of bolt retrieval.

Also, the bolt retrieval apparatus 1 according to this embodiment is configured to grip the bolt 20 by the notched portion 19a of the plate 11 a abutting against the bolt 20 at two locations 30a and 30b, and the notched portion 19b of the plate 11b abutting against the bolt 20 at two locations 30c and 30d. In this way, the plates 11 a and 11b abut against the side surface of the bolt 20 at four locations, so the bolt is able to be stably held.

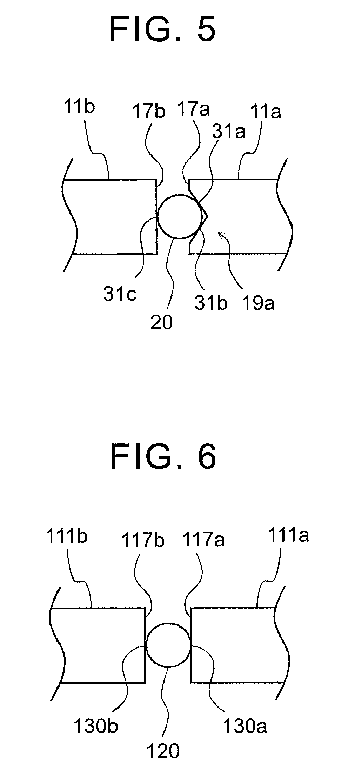

FIG. 5 is a plan view of another configuration example of the bolt retrieval apparatus according to the embodiment. As shown in FIG. 5, in the bolt retrieval apparatus according to this embodiment, the notched portion 19a may be provided on the end portion 17a of the plate 11 a, which is one of the two plates 11 a and 11b. The bolt retrieval apparatus shown in FIG. 5 grips the bolt 20 by the notched portion 19a of the plate 11a abutting against the bolt 20 at two locations 31a and 31b, and the end portion 17b of the plate 11b abutting against the bolt 20 at one location 31 c. In this case, the plates 11 a and 11b are able to abut against the side surface of the bolt 20 at three locations, so the bolt is able to be stably held.

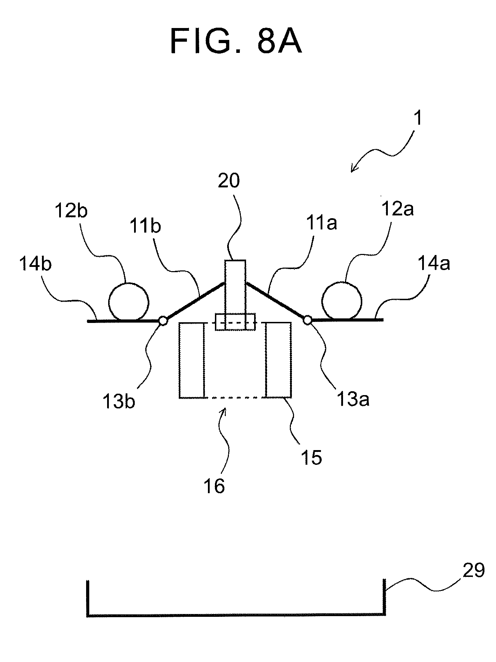

On the other hand, when a bolt 120 is gripped by an end portion 117a of a plate 111 a and an end portion 117b of a plate 111b, as in a comparative example shown in FIG. 6, the end portions 117a and 117b of the plates 111a and 111b abut against the bolt 120 at two locations 130a and 130b. Therefore, when the bolt 120 is gripped by the plates 111a and 111b, the bolt 120 may become unstable. Also, when the bolt retrieval apparatus drops the bolt 120 (see FIGS. 8A to 8C), the bolt 120 may become slanted. As a result, the bolt 120 may catch on the guide member 15 (see FIG. 1), or the bolt 120 may fall in an unintended direction and consequently may not fall into a bolt storing portion 29 (see FIGS. 8A to 8C).

The bolt retrieval apparatus 1 according to this embodiment is configured such that the V-shaped notched portion 19a is provided on at least the end portion 17a of the plate 11a. That is, in the case shown in FIGS. 1 to 4, the notched portions 19a and 19b are provided on both the end portions 17a and 17b of the plates 11a and 11b, respectively. Also, in the case shown in FIG. 5, the notched portion 19a is provided on the end portion 17a of the plate 11 a that is one of the two plates 11 a and 11b. Accordingly, the side surface of the bolt is able to be contacted in three or four locations, so the bolt is able to be stably held. Therefore, the bolt is able to be reliably retrieved. Also, the bolt 20 is able to be inhibited from being slanted when the bolt retrieval apparatus drops the bolt 20.

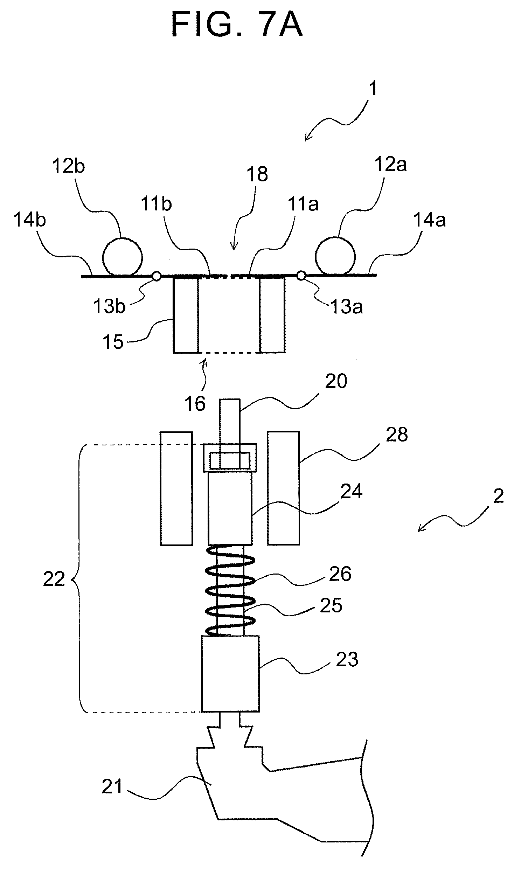

Next, an operation to retrieve the bolt using the bolt retrieval apparatus according to this embodiment will be described with reference to FIGS. 7A to 7C. FIGS. 7A to 7C are views illustrating an operation in which a removal device 2 retrieves the bolt 20 that has been removed from a predetermined member using the bolt retrieval apparatus 1.

As shown in FIG. 7A, the removal device 2 is provided with a rising / lowering mechanism 21 and a removing mechanism 22. The rising / lowering mechanism 21 raises and lowers the removing mechanism 22 in the vertical direction. The removing mechanism 22 removes the bolt 20 from the predetermined member. The removing mechanism 22 has a transmission member 23, a socket 24, a shaft 25, and a spring 26. The transmission member 23 and the socket 24 are connected via the shaft 25. Rotary torque from the rising / lowering mechanism 21 side is transmitted to the transmission member 23. This rotary torque is transmitted from the transmission member 23 to the socket 24 via the shaft 25.

Also, a guide member 28 is provided around the removing mechanism 22. This guide member 28 has an opening that passes through vertically. The guide member 28 guides the removing mechanism 22 so that the removing mechanism 22 does not become laterally displaced when the removing mechanism 22 moves up and down within the opening of the guide member 28.

When the removal device 2 removes a bolt from a predetermined member, a tip end of the socket 24 fits together with a head portion of the bolt that is attached to the predetermined member. Then, rotary torque is supplied from the rising / lowering mechanism 21 side to rotate the socket 24 and remove the bolt. As shown in FIG. 7A, the removed bolt 20 is held on the tip end of the removing mechanism 22, i.e., the tip end of the socket 24. For example, the bolt 20 is able to be reliably fixed to the tip end of the socket 24 by providing a magnet on the tip end of the socket 24.

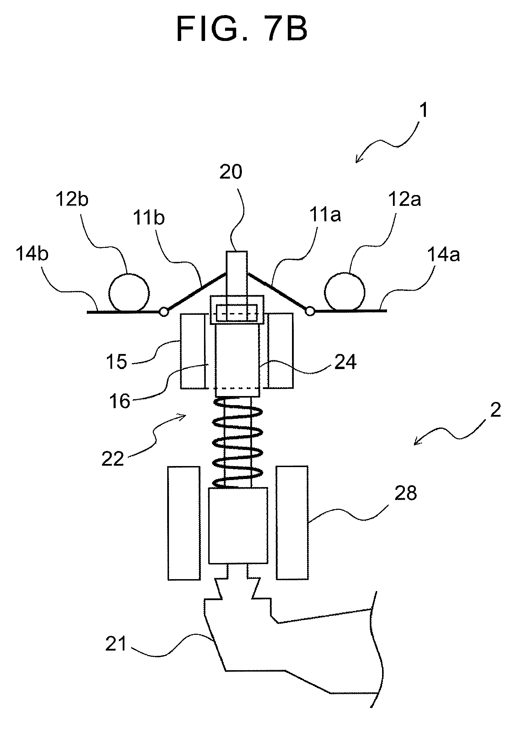

When using the bolt retrieval apparatus 1 to retrieve the bolt 20 that has been removed in this way, the removing mechanism 22 is raised using the rising / lowering mechanism 21 of the removal device 2, as shown in FIG. 7B. As a result, the bolt 20 is inserted from the opening 16 side of the guide member 15 toward the adjacent region 18 (see FIG. 7A) of the plates 11a and 11b. When the bolt 20 is inserted, both the plate 11a and the plate 11b abut against the bolt 20 and pivot upward.

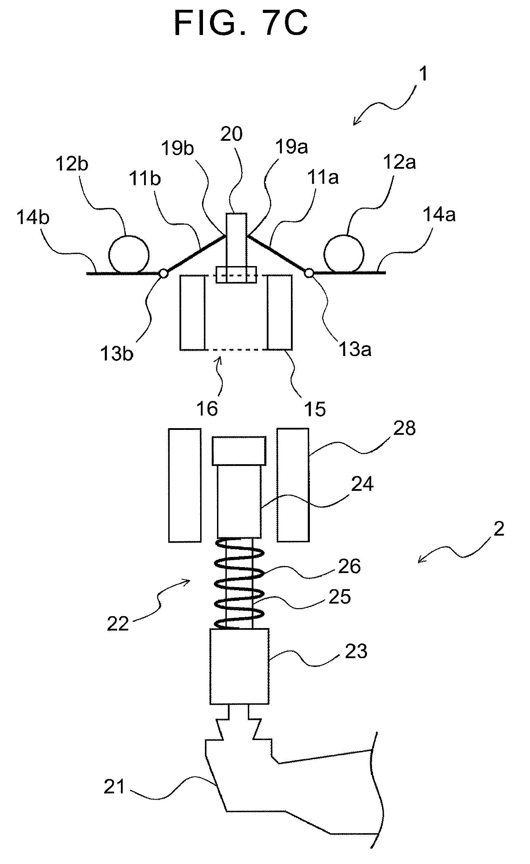

Then, as shown in FIG. 7C, the removing mechanism 22 is lowered using the rising / lowering mechanism 21 of the removal device 2. At this time, the notched portion 19a of the plate 11a and the notched portion 19b of the plate 11b grip the bolt 20 by abutting against the side surface thereof, so the bolt 20 is retained.

Next, an operation in which the bolt retrieval apparatus 1 drops the bolt 20 will be described with reference to FIGS. 8A to 8C. The bolt retrieval apparatus 1 according to this embodiment is configured to drop the retrieved bolt 20 into the bolt storing portion 29 when a predetermined condition is satisfied. As a result, the bolt 20 is able to be stored in the bolt storing portion 29 at the timing when the predetermined condition is satisfied. Also, the bolt retrieval apparatus 1 is again able to retrieve the next bolt.

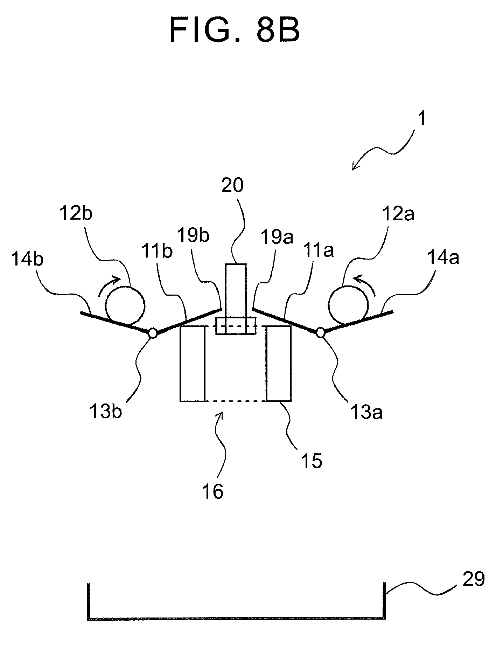

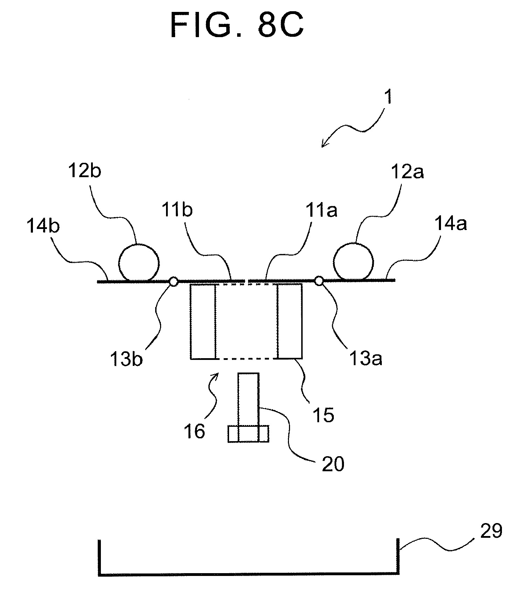

When dropping the bolt 20 that is gripped by the plate 11 a and the plate 11b shown in FIG. 8A, the supporting members 12a and 12b both pivot in the direction indicated by the arrows in FIG. 8B, as shown in FIG. 8B. Here, the plates 14a and 14b are fixed to the supporting members 12a and 12b, respectively, so when the supporting members 12a and 12b pivot, the plates 14a and 14b are also displaced. As a result, the connecting members 13a and 13b are also displaced downward, and the plates 11a and 11b are also both displaced downward (see FIGS. 8A and 8B). Then, when the supporting members 12a and 12b pivot further, the lower surfaces of the plates 11a and 11b abut against the guide member 15, such that the distance between the notched portion 19a of the plate 11a and the notched portion 19b of the plate 11b becomes wider. Then when the distance between the notched portion 19a of the plate 11 a and the notched portion 19b of the plate 11b becomes greater than the diameter of the bolt 20, the gripped bolt 20 drops into the bolt storing portion 29 (see FIG. 8C).

By the operation described above, the bolt retrieval apparatus 1 is able to retrieve (store) the held bolt 20 by dropping it into the bolt storing portion 29. This kind of operation is able to be performed when a predetermined condition is satisfied. The predetermined condition in this case may be set as appropriate.

For example, after the bolt 20 held by the removal device 2 shown in FIGS. 7A to 7C is gripped by the bolt retrieval apparatus 1, the bolt 20 may be dropped when the removal device 2 moves away from the bolt retrieval apparatus 1. Also, for example, a switch, not shown, may be provided on the bolt retrieval apparatus 1, and the bolt 20 may be dropped when a worker pushes this switch. Also, for example, a timer, not shown, may be provided in the bolt retrieval apparatus 1, and the bolt 20 may be automatically dropped when a predetermined period of time has passed after the bolt 20 is gripped by the bolt retrieval apparatus 1. Furthermore, the bolt 20 may be automatically dropped after a predetermined period of time has passed after the worker pushes the switch. The mechanism for pivoting the supporting members 12a and 12b when the removal device 2 moves away from the bolt retrieval apparatus 1, the mechanism for pivoting the supporting members 12a and 12b when the worker pushes the switch, and the mechanism for pivoting the supporting members 12a and 12b after the predetermined period of time has passed are all able to be formed using general technology, so a description of these will be omitted.

The invention according to the embodiments described above makes it possible to provide a bolt retrieval apparatus capable of reliably retrieving a bolt.

In the above embodiment, the notched portion 19a and 19b are formed in a V-shape when the plate 11 a and 11b are viewed from above. However, the shape of the notched portion 19a and 19b are not limited to V-shape, as long as the side surface of the bolt 20 is able to be contacted at three locations (four locations when the notched portion is provided on the end portions of both the first and second plates). For example, the notched portion 19a and 19b may have an arc-shape. Further, the number of the positions that each of the notched portions 19a and 19b abuts to the bolt 20 is not limited to two. In other words, each of the notched portions 19a and 19b may contact with the surface of the bolt 20 at more than three positions.

While the invention has been described in the context of the embodiments described above, the invention is not limited to only the structures of the embodiments. That is, the invention naturally includes various modifications, improvements, and combinations possible by one skilled in the art within the scope of the invention.

## Claims

1. A retrieval apparatus (1) for retrieving a bolt (20), the retrieval apparatus (1) comprising:
a guide member (15) having an opening (16) that passes through the guide member (15) vertically;
a first plate (11a) that has a first end portion (17a), the first end portion (17a) having a first notched portion (19a), the first notched portion (19) including a first contacting position and a second contacting position;
a second plate (11b) that has a second end portion (17b), the first end portion (17a) and the second end portion (17b) facing each other so as to define an adjacent region (18), on an upper side of the opening (16) of the guide member (15), wherein
the bolt (20) is insertable from inside the opening (16) toward the adjacent region (18),
the first plate (11a) and the second plate (11b) are adapted to abut against the bolt (20) and are pivotable upwards and
the first notched portion (19a) is adapted to abut against a side surface of the bolt (20) at least at the first contacting position and the second contacting position, the second end portion (17b) is adapted to abut against a side surface of the bolt (20), and the first notched portion (19a) and the second notched portion (19b) are adapted to grip the bolt (20).

2. The retrieval apparatus (1) according to claim 1, **characterized in that**
the first notched portion (19) has a V-shape when the first plate (11a) is viewed from above.

3. The retrieval apparatus (1) according to claim 1, **characterized in that**
the second end portion (17b) has a second notched portion (19b), the second notched portion (19b) including a third contacting portion and a fourth contacting portion, and
when the bolt (20) is inserted from inside the opening (16) toward the adjacent region (18),
the second notched portion (19b) is adapted to abut against the side surface of the bolt (20) at least at the third contacting portion and the fourth contacting portion.

4. The retrieval apparatus (1) according to claim 3, **characterized in that**
the first notched portion (19) has a V-shape when the first plate (11a) is viewed from above. and
the second notched portion (19b) has a V shape when the second plate (11b) is viewed from above.

5. The retrieval apparatus (1) according to any one of claims 1 to 4, **characterized in that**
the first plate (11a) is pivotally connected to a first supporting plate (14a) fixed to a pivotable first supporting member (12a), and
the second plate (11b) is pivotally connected to a second supporting plate (14b) fixed to a pivotable second supporting member (12b).

6. A retrieval method for retrieving a bolt (20) in a retrieval apparatus (1) comprising a guide member (15) having an opening (16) that passes through the guide member (15) vertically; a first plate (11a) that has a first end portion (17a), the first end portion (17a) having a first notched portion (19a), the first notched portion (19) including a first contacting position and a second contacting position; a second plate (11b) that has a second end portion (17b), the first end portion (17a) and the second end portion (17b) facing each other so as to define an adjacent region (18), on an upper side of the opening (16) of the guide member (15), the retrieval method comprising the steps of:
inserting the bolt (20) from inside the opening (16) toward the adjacent region (18),
abutting the first plate (11a) and the second plate (11b) against the bolt (20),
pivoting the first plate (11a) and the second plate (11b) upwards, and
abutting the first notched portion (19a) and the second end portion (17b) against a side surface of the bolt (20) and gripping the bolt (20).

7. The retrieval method according to claim 6, **characterized in that**
the first notched portion (19a) has a V-shape when the first plate (11a) is viewed from above.

8. The retrieval method according to claim 7, **characterized in that** the second end portion (17b) has a second notched portion (19b), the second notched portion (19b) including a third contacting portion and a fourth contacting portion, the retrieval method comprising the steps of:
inserting the bolt (20) from inside the opening (16) toward the adjacent region (18),
abutting the first plate (11a) and the second plate (11b) against the bolt (20),
pivoting the first plate (11a) and the second plate (11b) upwards, and
abutting the first notched portion (19a) and the second notched portion (19b) against the side surface of the bolt (20) and gripping the bolt (20).

9. The retrieval method according to claim 8, **characterized in that**
the second notched portion (19b) has a V shape when the second plate (11b) is viewed from above.

10. The retrieval method according to claim 6, **characterized in that** the first plate (11a) is pivotally connected to a first supporting plate (14a) fixed to a pivotable first supporting member (12a), and the second plate (11b) is pivotally connected to a second supporting plate (14b) fixed to a pivotable second supporting member (12b), the retrieval method comprising the steps of:
pivoting the first and second supporting member (12a, 12b) such that the distance between the first notched portion (19a) and the second end portion (17b) becomes wider.

11. The retrieval method according to claim 8, **characterized in that** the first plate (11a) is pivotally connected to a first supporting plate (14a) fixed to a pivotable first supporting member (12a), and the second plate (11b) is pivotally connected to a second supporting plate (14b) fixed to a pivotable second supporting member (12b), the retrieval method comprising the steps of:
pivoting the first and second supporting member (12a, 12b) such that the distance between the first notched portion (19a) and the second notched portion (19b) becomes wider.
